# EUROPÄISCHE PATENTSCHRIFT

(11) **EP 1 346 877 B1**
(45) Veröffentlichungstag und Bekanntmachung des Hinweises auf die Patenterteilung: **21.01.2009**
(21) Anmeldenummer: 03005079.3
(22) Anmeldetag: 07.03.2003
(51) Int. Cl.: B60Q 1/52

(54) **Vorrichtung zur Anzeige einer Gefahrensituation bei einem Spurwechsel in einem Kraftfahrzeug**
Device for indicating a hazardous situation during lane change for a motor vehicle
Dispositif d'affichage d'une situation dangereuse lors d'un changement de voie pour vehicule automobile

(30) Priorität: 22.03.2002 DE 10212787
(43) Veröffentlichungstag der Anmeldung: 24.09.2003
(73) Patentinhaber: AUDI AG, 85045 Ingolstadt (DE)
(72) Erfinder: Popken, Markus, 85139 Wettstetten (DE); Theinert, Bernd, 92339 Beilngries (DE); Lübcke, Michael, 85049 Ingolstadt (DE)
(74) Vertreter: Thielmann, Frank

(56) Entgegenhaltungen:
- WO-A-02/32719
- DE-A1- 10 016 159
- DE-A1- 19 948 056
- GB-A- 2 265 744
- US-A- 5 712 618

## Beschreibung

Die Erfindung betrifft ein Kraftfahrzeug, mit einem Spurwechselassistenten-System zur Erfassung einer Gefahrensituation bei einem Spurwechsel umfassend eine Einrichtung zum Erfassen etwaiger Kraftfahrzeuge in einem seitlichen und rückwärtigen Fahrzeugbereich, sowie mit einer seitlichen und/oder rückwärtigen Leuchteinrichtung.

Spurwechselassistenz-Systeme sind bekannt und stehen kurz vor der Entwicklung zur Serienreife. Diese Systeme zeichnen sich dadurch aus, dass mit ihnen die Beobachtung des seitlichen, auf einer benachbarten Fahrspur fahrenden Verkehrs möglich ist und anhand der über das System gewonnenen Informationen beispielsweise eine Lücke im seitlichen Verkehrsfluss erkannt, in ihrer Größe ermittelt und die Möglichkeit eines Spurwechsels bestimmt werden kann. Zu diesem Zweck sind geeignete Radarsensoren vorgesehen, die den benachbarten Verkehrsfluss "abtasten". Ergibt das Überwachungsergebnis, dass beispielweise bei Vorliegen einer Spurwechselabsicht (Blinker ist z.B. betätigt) eine folgende Lücke nicht ausreichend groß ist um gefahrlos einzuscheren, so gibt das System ein Warnsignal an den Fahrer, das ihm die Gefahrensituation anzeigt.

Ein gattungsgemäßes Kraftfahrzeug ist aus GB-A-2 265 744 bekannt.

Der Erfindung liegt das Problem zugrunde, ein Kraftfahrzeug anzugeben, bei dem die über das Spurwechselassistenz-System gewonnenen Informationen über die Möglichkeit eines gefahrvollen Spurwechsels zur Erhöhung der Verkehrssicherheit noch zweckmäßiger verwendet wird.

Zur Lösung dieses Problems ist erfindungsgemäß ein Kraftfahrzeug gemäß Anspruch 1 vorgesehen.

Beim erfindungsgemäßen Kraftfahrzeug ist mit besonderem Vorteil vorgesehen, die Gefahrensituation nicht nur dem Fahrer sondern auch den übrigen, in seiner Nähe befindlichen Verkehrsteilnehmern, die von der Gefahrensituation unmittelbar betroffen sein können, anzuzeigen. Dies erfolgt dann, wenn eine konkrete Spurwechselabsicht des Fahrers erkannt wurde, er also tatsächlich die Spur wechseln möchte, und das Spurwechselassistenz-System durch Analyse des benachbarten Verkehrsflusses zwar eine Lücke, jedoch auch gleichzeitig eine Gefahrensituation erkannt und gemeldet hat. Diese Signale werden einer entsprechenden Verarbeitungseinrichtung gegeben, über die eine seitliche und/oder rückwärtige Leuchteinrichtung entsprechend angesteuert wird, so dass über diese ein Warnsignal nach außen gegeben wird. D.h. die auf der Nachbarspur befindlichen Verkehrsteilnehmer im näheren Umkreis des erfindungsgemäßen Kraftfahrzeugs können auf die Gefahrensituation aufmerksam gemacht werden und entsprechend vorsichtig reagieren. Wenngleich diesen Verkehrsteilnehmern natürlich nicht genau bekannt ist, aus welchem Grund das Warnsignal nun konkret gegeben wird, führt das Erkennen des Signals trotz allem zu einer erhöhten Vorsicht und hilft, die Verkehrssicherheit zu erhöhen, wodurch alle beteiligten Verkehrsteilnehmer profitieren.

Eine Spurwechselabsicht kann nach einer ersten Erfindungsausgestaltung dergestalt erfasst werden, dass der Fahrer den Blinkhebel betätigt, wodurch das Spurwechselabsichts-Signal erzeugt wird. Wenngleich sich hierdurch bekanntermaßen die Blinkleuchte einschaltet, bedeutet die zusätzliche Gabe des Warnsignals bei Erfüllen der eingangs genannten Randbedingungen eine deutliche Verbesserung der Warnfunktion, zumal gerade die häufig relativ kleinen Blinkleuchten nicht immer und in jeder Situation von nachfolgenden Verkehrsteilnehmern erfasst werden. Wird jedoch ein auffälliges Warnsignal gegeben, so ist davon auszugehen, dass dieses erfasst wird.

Alternativ zur Möglichkeit der Erzeugung des Spurwechselabsichts-Signals durch Betätigen des Blinkhebels, was eigentlich dem Idealfall entspricht und von einem Kraftfahrer korrekterweise erfolgen sollte, besteht auch die Möglichkeit, Mittel zur Erfassung einer Änderung des Lenkwinkels der Lenkeinrichtung des Kraftfahrzeugs vorzusehen, die bei einer Erfassung der Lenkwinkeländerung das eine Spurwechselabsicht anzeigende Signal erzeugen. Denn es besteht immer die Möglichkeit, dass ein Kraftfahrer ohne zu Blinken versucht auszuscheren und in eine Lücke einzufädeln. In diesem Fall wird das Spurwechselabsichts-Signal sofort dann erzeugt, wenn eine geringe Änderung des Lenkwinkels, die zum Ausscheren erforderlich ist, erfolgt. Zur Erfassung der Spurwechselabsicht kann alternativ oder zusätzlich zur Lenkwinkelerfassung auf Daten anderer im Kraftfahrzeug vorhandene Sensoren oder Systeme zugegriffen werden; beispielsweise auf ein Lane-Departure-Warning-System (LDW), bei dem mittels einer Kamera die Fahrspur aufgenommen und durch Bildanalysen ein Abweichen von der Fahrspur ermittelt wird. Diese Information kann dann allein oder z.B. in Verbindung mit der Information über eine Lenkwinkeländerung zum Auslösen der erfindungsgemäßen Prozedur führen.

Grundsätzlich kann die Einrichtung zum Betätigen der seitlichen und/oder rückwärtigen Blinkleuchten ausgebildet sein, vornehmlich in dem Fall, in dem der Fahrer den Blinkhebel zum Anzeigen der Spurwechselabsicht nicht betätigt hat. D.h. es wird in diesem Fall auf jeden Fall die übliche Blinkleuchte über die Einrichtung angesteuert und so das Warnsignal an die umgebenden Verkehrsteilnehmer gegeben. Für den Fall, dass der Fahrer den Blinkhebel betätigt hat, kann die Einrichtung zum Verändern der Blinkfrequenz und/oder der Leuchtintensität und/oder der Form und/oder der Farbe einer Blinkleuchte ausgebildet sein. Die Blinkleuchte kann also deutlich schneller als üblich blinken, beispielsweise mit doppelter oder dreifacher Blinkfrequenz, auch kann die Leuchtintensität erhöht werden, so dass das Blinklicht deutlich heller und greller ist. Daneben besteht die Möglichkeit, die Form zu ändern, insbesondere bei Blinkleuchten bestehend aus LED-Displays, bei denen die einzelnen LED-Leuchtkörper separat angesteuert werden und so die Form des Leuchtzeichens problemlos variiert werden kann. Auch andere Leuchten mit ähnlichen einzeln ansteuerbaren Leuchtelementen können verwendet werden. Daneben besteht die Möglichkeit, auch die Farbe einer Blinkleuchte zu verändern, beispielsweise zusätzlich ein rotes Blinklicht zuzuschalten oder bei dem LED-Display zusätzliche andersfarbige LEDs mit anzuschalten etc. Die Möglichkeiten sind hier beliebig und sollten stets darauf abzielen, ein vom nachfolgenden Verkehr ohne weiteres erfassbares und als solches erkennbares Warnsignal zu erzeugen.

Falls der Fahrer nicht blinkt und die Einrichtung zum Betätigen des seitlichen und/oder rückwärtigen Blinkleuchten ausgebildet ist, so kann wie beschrieben grundsätzlich die jeweilige Blinkleuchte bei Vorliegen der die Randbedingung erfüllenden Signale angeschalten werden, um das Warnsignal zu geben. Dabei ist es jedoch zweckmäßig, um den Warnsignalcharakter noch stärker hervorzuheben, wenn die Einrichtung zum Betätigen der seitlichen und/oder rückwärtigen Blinkleuchten unter Veränderung der Blinkfrequenz und/oder der Leuchtenintensität und/oder der Form und/oder der Farbe der Blinkleuchte im Vergleich zum normalen Blinkbetrieb ausgebildet ist. D.h. es wird nach dieser Erfindungsausgestaltung nicht nur der Blinker in seinem normalen Blinkbetrieb betätigt, sondern mit demgegenüber veränderter Blinkfrequenz/Leuchtintensität/Form/Farbe, je nachdem, wie das System insgesamt ausgelegt ist. Dies ist zweckmäßig, da der Verkehr auf diese Wiese das Warnsignal als solches wesentlich schneller und eindeutiger erfasst als es bei bloßem Anschalten der Blinkleuchten in ihrem normalen Betrieb möglich sein kann.

Alternativ oder zusätzlich zu den genannten Betätigungsmöglichkeiten der Blinkleuchten kann die Einrichtung auch zum Betätigen wenigstens einer anderen als der Blinkleuchte, gegebenenfalls zusätzlich zur Blinkleuchte zu betätigenden Leuchte der mehrere Leuchten umfassenden Leuchteinrichtung ausgebildet sein. Bekanntermaßen sind am Fahrzeugheck mehrere Leuchten vorgesehen, nämlich die Blinkleuchte, die Bremsleuchte, die Abblendlichtleuchte und der Rückfahrscheinwerfer. Es besteht nun die Möglichkeit, eine beliebige dieser Leuchten oder mehrere beliebige Leuchten in Kombination bei Vorliegen der die Randbedingung erfüllenden Informationssignale anzusteuern, um so das Warnsignal zu geben. Zweckmäßig ist dabei, beispielsweise die Rückfahrscheinwerfer zusammen mit der Blinkleuchte, gegebenenfalls mit veränderter Blinkfrequenz etc. zu betätigen, da zum einen die Rückfahrscheinwerfer bei einem normalen Fahren auf der Autobahn nicht leuchten und infolgedessen das Aufleuchten der Rückfahrscheinwerfer äußerst ungewöhnlich ist. Zum anderen sind die Rückfahrscheinwerfer in der Regel sehr grell, so dass sie auch sicher wahrgenommen werden. Auch können hierzu die Bremsleuchten eingeschalten werden, jedoch sollte hier darauf Wert gelegt werden, dass diese beispielsweise ebenfalls sehr schnell blinken oder dergleichen, damit benachbarte Kraftfahrer nicht versehentlich meinen, dass das Fahrzeug bremst, während dieses sich tatsächlich auf das Ausscheren vorbereitet. Insgesamt sind beliebige Leuchtenkombinationen ansteuerbar.

Neben den bekannten Leuchteinrichtungen, bei denen jede Leuchte über wenigstens eine separate Glühbirne realisiert ist, kann die über die Einrichtung betätigte Leuchteinrichtung auch eine mehrere Leuchtkörper umfassende Leuchteinrichtung, insbesondere in Form einer Multi-LED-Leuchteinrichtung sein. Derartige Leuchteinrichtungen sind bekannt, mit ihnen kann auf einfache Weise beispielsweise ein Lauflicht oder dergleichen erzeugt werden. Gleichermaßen kann die Form des gegebenen optischen Warnsignals beliebig variiert werden etc.

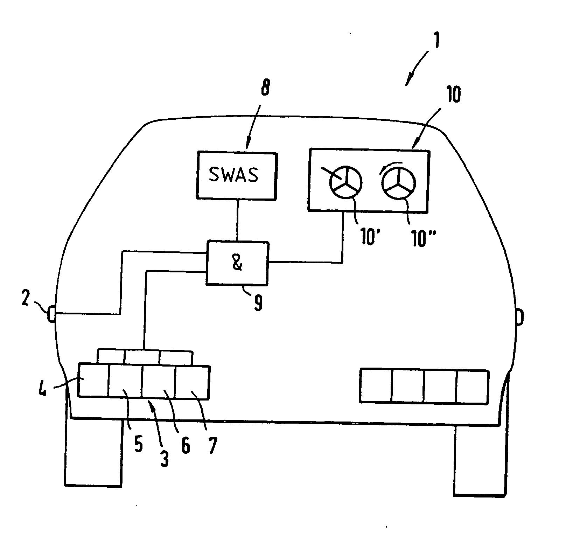

Weitere Vorteile, Merkmale und Einzelheiten der Erfindung ergeben sich aus dem im folgenden beschriebenen Ausführungsbeispiel sowie anhand der Zeichnung.

In dieser ist in Form einer Prinzipskizze ein erfindungsgemäßes Kraftfahrzeug 1 gezeigt, wobei von diesem lediglich die zur erfindungsgemäßen Gabe des Warnsignals erforderlichen Komponenten dargestellt sind. Das Kraftfahrzeug 1 besitzt im gezeigten Ausführungsbeispiel eine seitliche Leuchteinrichtung 2 sowie eine rückwärtige Leuchteinrichtung 3, wobei die Leuchteinrichtung 2 in der Regel als seitliche Blinkleuchte ausgebildet ist, während die Leuchteinrichtung 3 eine rückwärtige Blinkleuchte 4, eine Bremsleuchte 5, eine Abblendlichtleuchte 6 sowie einen Rückfahrscheinwerfer 7 aufweist. Es kann sich bei der Leuchteinrichtung 3 um eine bekannte Leuchteinrichtung mit separaten Glühbirnen handeln, alternativ kann es auch ein LED-Display sein, bei dem entsprechende Bereiche realisiert sind. Ferner verfügt das Kraftfahrzeug 1 über ein Spurwechselassistenz-System 8, das mit "SWAS" (SWAS = Spurwechselassistenz-System) abgekürzt ist. Dieses ist lediglich als Block dargestellt, auf eine Darstellung sämtlicher Einzelkomponenten wurde verzichtet, da ein solches Spurwechselassistenz-System an und für sich bekannt ist und es hier lediglich auf seine Grundfunktionalität ankommt. Mit dem Spurwechselassistenz-System ist es möglich, den seitlichen und rückwärtigen Verkehrsfluss auf einer benachbarten Fahrspur zu überwachen und so eine dort gebildete oder sich bildende Lücke, in die das Kraftfahrzeug 1 bei einem Spurwechsel einscheren kann, zu erkennen, in ihrer Größe zu berechnen und zu überprüfen, ob ein Einscheren möglich ist oder ob eine Kollision oder zumindest eine gefährliche Verkehrsbehinderung hieraus resultiert. Über ein nicht näher gezeigtes Warnmittel, z.B. in Form eines Tonsignals oder eines optischen oder haptischen Signals wird eine Gefahrensituation dem Fahrer des Kraftfahrzeugs 1 angedeutet.

Beim erfindungsgemäßen Kraftfahrzeug wird ein solches eine Gefahrensituation anzeigendes Signal von dem Spurwechselassistenz-System 8 an eine Einrichtung 9 gegeben, über die im gezeigten Beispiel die Leuchteinrichtung 2 und im gezeigten Beispiel sämtliche der Leuchten 4, 5, 6, 7 angesteuert werden können, was letztlich zusätzlich zum eigentlichen Betrieb derselben, wozu möglicherweise separate Ansteuereinrichtungen vorgesehen sein können, erfolgt. Selbstverständlich kann es sich bei der Einrichtung 9 auch um ein zentrales, den Betrieb sämtlicher dieser Leuchten steuerndes Steuergerät handeln.

Neben dem Spurwechselassistenz-System umfasst das erfindungsgemäße Kraftfahrzeug 1 ferner eine Einrichtung 10 zum Erfassen einer Spurwechselabsicht des Kraftfahrers. Diese Spurwechselabsicht kann zum einen dadurch erfolgen, dass der Fahrer den Blinkhebel betätigt, also seinen Spurwechsel durch Blinken anzeigt. Wird der Blinkhebel betätigt, so wird ein entsprechendes Spurwechselabsichts-Signal an die Einrichtung 9 gegeben. Zusätzlich oder alternativ zu der Erfassung einer Blinkhebelbetätigung 10' kann eine Spurwechselabsichtserfassung auch durch Überwachung einer Lenkwinkeländerung 10" erfolgen. Hierbei wird überprüft, ob sich der Lenkwinkel durch Betätigen des Lenkrads, welches mit den Symbolen 10' und 10" jeweils dargestellt ist, ändert und der Kraftfahrer auf diese Weise bereits den Ausschervorgang einleitet. Dies kann über eine geeignete Sensorik erfolgen, was bereits bekannt ist. Auch in diesem Fall wird, wenn sich eine solche Lenkwinkeländerung ergibt, ein entsprechendes Spurwechselabsichtssignal an die Einrichtung 9 gegeben. Um einen Spurbezug zur Fahrspur zu haben um auszuschließen, dass der Fahrer lediglich einer Kurve folgt, kann zusätzlich z.B. das Informationssignal einer Fahrspurerfassungseinrichtung, z.B. einem LDW-System (hier nicht näher gezeigt) verwendet werden, um eindeutig zu erkennen, dass es sich um einen tatsächlichen Spurwechsel handelt. Auch könnte der Fahrer beobachtet werden, ob er in den Rück- oder Seitenspiegel unmittelbar vor der Lenkwinkeländerung geblickt hat, was er bei einer Kurvenfahrt normalerweise nicht macht.

Liegen nun an der Einrichtung 9 sowohl das Gefahrensignal des Spurwechselassistenz-Systems 8 wie auch ein Spurwechselabsichtssignal, gegeben über die Einrichtung 10, gleichzeitig an, was durch das "&"-Symbol dargestellt ist, so steuert die Einrichtung 9 je nach ihrer Konfiguration oder Programmierung eine oder mehrere der Leuchten 2, 4, 5, 6, 7 an, um die gegebene Gefahrensituation auch benachbarten Verkehrsteilnehmern, die von einem Ausscheren des Kraftfahrzeugs 1 unmittelbar betroffen sein können, anzuzeigen. Beispielsweise wird die Blinkleuchte 2 und die Blinkleuchte 4 betätigt, wenn dies nicht bereits aufgrund der Blinkhebelbetätigung der Fall ist. Auch ist eine Erhöhung oder Änderung der Blinkfrequenz und der Leuchtintensität möglich. Daneben besteht die Möglichkeit, alternativ oder zusätzlich beispielsweise die Rückfahrscheinwerfer 7 (gegebenenfalls beide Rückfahrscheinwerfer 7 der beiden Leuchteneinrichtungen 3) zu betätigen, auch diese können blinken oder dergleichen. Auch ist beispielsweise ein sehr schneller Blinkbetrieb der Abblendleuchte oder der Bremsleuchte möglich, ferner ist jedwede sonstige Leuchtkombination denkbar. Auch ist in diesem Fall ein Lauflichtbetrieb möglich, d.h. die Leuchten 4, 5, 6, 7 werden in sehr schneller Lauffolge nacheinander an- und ausgeschalten etc. Hier sind beliebige Kombinationen denkbar, wobei die Kombination so gewählt sein sollte, dass der Warnfunktionscharakter am größten ist.

Zweckmäßig ist es, wenn die beiden Signale an der Einrichtung 9 innerhalb eines bestimmten Zeitintervalls anliegen müssen, damit vermieden wird, dass aufgrund eines bereits längere Zeit anliegenden, eigentlich nicht mehr aktuellen Signals der Warnbetrieb initiiert wird, wenngleich dies aufgrund der gegebenen Situation überhaupt nicht erforderlich ist. Auch ist selbstverständlich ein Rücksetzen der Einrichtung 9 zweckmäßig, wenn das Warnsignal gegeben wurde und sich die Situation geändert hat.

Ferner kann das System natürlich nicht nur für ein Ausscheren nach links ausgebildet sein, sondern auch für ein Wechseln der Spur nach rechts, z.B. von der Überholspur auf die mittlere Fahrspur. Hier werden dann zweckmäßigerweise die rechts am Fahrzeug 1 befindlichen Leuchteinrichtungen zur Gabe des Warnsignals angesteuert.

## Patentansprüche

1. Kraftfahrzeug, mit einem Spurwechselassistenz-System zur Erfassung einer Gefahrensituation bei einem Spurwechsel umfassend eine Einrichtung zum Erfassen etwaiger Kraftfahrzeuge in einem seitlichen und rückwärtigen Fahrzeugbereich, sowie mit einer seitlichen und/oder rückwärtigen Leuchteinrichtung, wobei eine Einrichtung (9) zum Betätigen der seitlichen und/oder rückwärtigen Leuchteinrichtung (2, 3) zur Gabe eines Warnsignals bei Vorliegen eines eine Spurwechselabsicht des Fahrers anzeigenden Signals und eines von dem Spurwechselassistenz-System (8) zu gebenden und eine erfasste Gefahrensituation anzeigenden Signals vorgesehen ist,
**dadurch gekennzeichnet,**
**dass** Mittel (10") zur Erfassung einer Änderung des Lenkwinkels der Lenkeinrichtung des Kraftfahrzeugs (1) vorgesehen sind, die bei einer Erfassung einer Lenkwinkeländerung das eine Spurwechselabsicht anzeigende Signal erzeugen, und/oder Mittel zur Erfassung und Überwachung der Fahrspur, insbesondere ein Lane-Departure-Warning-System vorgesehen sind, die bei Erfassung eines Verlassens der Fahrspur das eine Spurwechselabsicht anzeigende Signal erzeugen, wobei die Einrichtung (9) zum Betätigen der seitlichen und/oder rückwärtigen Blinkleuchten (2, 4), sowie zum Verändern der Blinkfrequenz und/oder der Leuchtintensität und/oder der Form und/oder der Farbe einer Blinkleuchte (2, 4) bei infolge einer Betätigung des Blinkers gegebenen Blinktätigkeit oder zum Betätigen der seitlichen und/oder rückwärtigen Blinkleuchten (2, 4) unter Veränderung der Blinkfrequenz und/oder der Leuchtintensität und/oder der Form und/oder der Farbe der Blinkleuchte im Vergleich zum normalen Blinkbetrieb ausgebildet ist.

2. Kraftfahrzeug nach Anspruch 1,
**dadurch gekennzeichnet,**
**dass** das eine Spurwechselabsicht anzeigende Signal bei einer Betätigung des Blinkhebels (10') erzeugt wird.

3. Kraftfahrzeug nach Anspruch 1 oder 2,
**dadurch gekennzeichnet,**
**dass** die Gabe in Abhängigkeit wenigstens eines Informationssignals eines Fahrspurüberwachungssystems, das als Bezugspunkt für die Lenkwinkeländerung dient, insbesondere eines Informationssignals eines Lane-Departure-Warning-Systems erfolgt.

4. Kraftfahrzeug nach einem der vorangehenden Ansprüche,
**dadurch gekennzeichnet,**
**dass** die Einrichtung (9) zum Betätigen wenigstens einer anderen als der Blinkleuchte (2, 4), gegebenenfalls zusätzlich zur Blinkleuchte (2, 4) zu betätigenden Leuchte (5, 6, 7) der mehrere Leuchten umfassenden Leuchteinrichtung (3) ausgebildet ist.

5. Kraftfahrzeug nach einem der vorangehenden Ansprüche,
**dadurch gekennzeichnet,**
**dass** die über die Einrichtung (9) betätigte Leuchteinrichtung (2, 3) eine mehrere Leuchtkörper umfassende Leuchteinrichtung, insbesondere in Form einer Multi-LED-Leuchteinrichtung ist.

## Claims

1. Vehicle with a lane-change assistance system, for determining a hazardous situation when changing lanes, comprising a device for detecting any other vehicles in an area to the side of and behind the given vehicle, and with a lateral and/or rear light device, whereby there is an appliance (9) for operating the lateral and/or rear lighting device (2, 3) to give a warning signal when there is a signal showing the driver's intention to change lane, and a signal, to be given by the lane-change assistance system (8), showing that a hazardous situation has been detected,
**characterized in that**,
there are means (10"), for detecting a change in the steering angle of the steering mechanism of the vehicle (1), that, on detecting a change in the steering angle, produce the one signal that shows the intention to change lane, and/or there are means of recording and monitoring the lane, particularly a lane-change warning system, that, on detecting departure from a given lane, produce the one signal that shows the intention to change lane, whereby the appliance (9) is formed to operate the lateral and/or rear flashing indicator lights (2, 4), and to change the flashing indicator frequency and/or the light intensity and/or the form and/or the colour of a flashing indicator light in the case of flashing-light indicating arising as a result of use of the flashing light indicator, or to operate the side and/or rear flashing indicator lights (2, 4) when there is a change in the flashing indicator frequency and/or the light intensity and/or the form and/or the colour of the flashing indicator lights by comparison with normal flashing-light indicating.

2. Vehicle in accordance with claim 1,
**characterized in that**,
the signal showing an intention to change lane is produced when the indicator lever (10') is used.

3. Vehicle in accordance with claims 1 or 2,
**characterized in that**,
signalling is dependent on at least one information signal from a lane-change monitoring system, which serves as a reference point for the change in steering angle, particularly an information signal of a lane-change warning system.

4. Vehicle in accordance with one of the preceding claims,
**characterized in that**,
the appliance (9) is formed to operate at least one other light (5, 6, 7), to be operated, from the several lights comprising the lighting device (3), and other than the flashing indicator light (2, 4) or, where applicable, in addition to the flashing indicator light (2, 4).

5. Vehicle in accordance with one of the preceding claims,
**characterized in that**
the lighting (2, 3) operated by means of the appliance (9) is a lighting device, comprising several lights, and is particularly in the form of a multi-LED lighting device.

## Revendications

1. Véhicule automobile équipé d'un système d'assistance de changement de voie servant à détecter une situation de danger lors d'un changement de voie comportant un dispositif servant à détecter la présence éventuelle de véhicules dans une zone située sur le côté et à l'arrière du véhicule, équipé également d'un dispositif d'éclairage latéral et/ou arrière, un dispositif (9) servant à actionner le dispositif d'éclairage (2, 3) latéral et/ou arrière étant prévu pour émettre un signal d'avertissement en cas de présence d'un signal indiquant l'intention du conducteur de changer de voie et d'un signal devant être émis par le système d'assistance de changement de voie (8) et indiquant la détection d'une situation de danger,
**caractérisé en ce**
**que** des moyens (10") servant à détecter une modification de l'angle de braquage du dispositif de braquage du véhicule automobile (1) sont prévus, lesquels génèrent, en cas de détection d'une modification de l'angle de braquage, le signal indiquant une intention de changer de voie, et/ou en ce que des moyens servant à détecter et à surveiller la trajectoire du véhicule, notamment un système Lane Departure Warning (système d'avertissement en cas de sortie de voie) sont prévus, lesquels génèrent, lorsqu'ils détectent que le véhicule quitte sa trajectoire, le signal indiquant une intention de changer de voie, le dispositif (9) servant à actionner les clignotants (2, 4) latéraux et/ou arrière et servant à modifier la fréquence de clignotement et/ou l'intensité de l'éclairage et/ou la forme et/ou la couleur d'un clignotant (2, 4) en cas d'une activité de clignotement donnée suite à l'actionnement d'un clignotant ou servant à actionner les clignotants (2, 4) latéraux et/ou arrière en modifiant la fréquence de clignotement et/ou l'intensité d'éclairage et/ou la forme et/ou la couleur des clignotants en comparaison au fonctionnement normal des clignotants.

2. Véhicule automobile selon la revendication 1,
**caractérisé en ce**
**que** le signal indiquant une intention de changement de voie est généré en cas d'actionnement du levier de clignotant (10').

3. Véhicule automobile selon la revendication 1 ou 2,
**caractérisé en ce**
**que** l'émission se produit en fonction d'au moins un signal d'information d'un système de surveillance de la trajectoire du véhicule, lequel sert de point de référence pour la modification de l'angle de braquage, en particulier en fonction d'un signal d'information d'un système Lane Departure Warning (système d'avertissement en cas de sortie de voie).

4. Véhicule automobile selon l'une quelconque des revendications précédentes,
**caractérisé en ce**
**que** le dispositif (9) est réalisé pour actionner au moins une autre lampe (5, 6, 7) du dispositif d'éclairage (3) comportant plusieurs lampes, devant être actionnée en tant que clignotant (2, 4), le cas échéant en supplément du clignotant (2, 4).

5. Véhicule automobile selon l'une quelconque des revendications précédentes,
**caractérisé en ce**
**que** le dispositif d'éclairage (2, 3) actionné via le dispositif (9) est un dispositif d'éclairage comportant plusieurs corps d'éclairage, en particulier sous la forme d'un dispositif d'éclairage multi-DEL.
